# EUROPEAN PATENT APPLICATION

(11) **EP 4 071 508 A1**
(43) Date of publication of application: **12.10.2022**
(21) Application number: 21167554.1
(22) Date of filing: 09.04.2021
(51) Int. Cl.: G01S 13/56, G01S 7/02, G01S 13/86, G01S 13/88, H05B 45/00, H05B 47/115, G01S 13/42, H01Q 3/36, G01S 13/02

(54) **MOVEMENT DETECTOR FOR A LUMINAIRE**

(71) Applicant: Tridonic GmbH & Co. KG, 6851 Dornbirn (AT)
(72) Inventor: Künzli, Markus, 6850 Dornbirn (AT); Kistler, Roger, 6850 Dornbirn (AT); Zengerle, Thomas, 6850 Dornbirn (AT)
(74) Representative: Beder, Jens

(57) **Abstract**

The present invention provides a movement detector (2) for a luminaire (1), wherein the movement detector (2) comprises a radar sensor (2a), the radar sensor (2a) comprising an antenna array with a plurality of antennas (2b). The movement detector (2) is configured to detect, in a detection area (Al, A2), movement of a physical object, optionally a person, using the radar sensor (2a). At least two antennas of the plurality of antennas (2b) are configured to set the detection area (Al, A2) of the movement detector (2) by emitting electromagnetic waves with a phase shift between each other. The present invention further provides a luminaire (1) comprising such a movement detector (2), and a method for setting a detection area (Al, A2) of a movement detector (2) for a luminaire (1).

## Description

The present invention relates to a movement detector for a luminaire, a luminaire comprising such a movement detector and a method for setting a detection area of a movement detector.

A movement detector may be used in a luminaire for detecting persons in a vicinity of the luminaire and controlling the lighting respectively illumination provided by the luminaire in dependence on the detection result of the movement detector. For example, in case no movement of a person is detected in the vicinity of the luminaire by the movement detector, the luminaire may be controlled to not emit light (i.e. no light emission) or to emit light at a dimmed level in order to save electrical energy for operating the luminaire. In case movement of a person is detected in the vicinity of the luminaire by the movement detector, the luminaire may be controlled to emit light or to emit undimmed light in order to illuminate respectively provide light to the vicinity of the luminaire.

The area, in which the movement detector is configured to detect a person is called detection area of the movement detector. The term "detection zone" may be used as a synonym for the term "detection area". Typically, the detection area of a movement detector depends on the construction of the movement detector, e.g. on one or more optic elements of the movement detector setting the detection area. Therefore, in order to set the detection area of the movement detector, when installing respectively arranging the movement detector at a luminaire (in particular in or on the luminaire) the movement detector may be installed in a tilted position. The tilted position allows the detection area of the movement detector to be directed to a desired direction or area of the vicinity of the luminaire, when the movement detector is installed respectively arranged at the movement detector. The disadvantage of a tilted position of the movement detector may be that there is not enough space in or on the luminaire for the tilted installation position. With other words, it may be desirable to arrange the movement detector in or on the luminaire without tilting the movement detector. In case a tilted position is required, the design options for designing a luminaire, at which the movement sensor is to be installed, may be limited due to the space needed for the tilted installation position. The terms "mount" and "attach" may be used as synonyms for the term install.

Therefore, it is an object of the present invention to provide a movement detector for a luminaire that may be configured to set its detection area without the above describe disadvantage. In particular, it is an object of the present invention to provide a movement detector for a luminaire that may be configured to set its detection area independent of an installation position of the movement detector at the luminaire.

These and other objects, which become apparent upon reading the following description, are solved by the subject-matter of the independent claim. The dependent claims refer to preferred embodiments of the invention.

According to a first aspect of the present invention, a movement detector for a luminaire is provided. The movement detector comprises a radar sensor, wherein the radar sensor comprises an antenna array with a plurality of antennas. The movement detector is configured to detect, in a detection area, movement of a physical object using the radar sensor. The physical object is optionally a person. At least two antennas of the plurality of antennas are configured to set the detection area of the movement detector by emitting electromagnetic waves with a phase shift between each other.

With other words, the present invention proposes to use a phase shift between at least two antennas of the radar sensor of the movement detector for setting the detection area of the movement detector. Therefore, the movement detector does not need to be arranged in a specific position and orientation, e.g. in a tilted position, in order to set the detection area of the movement detector to a desired direction or desired area. Thus, the above described disadvantage is overcome by the movement detector according to the first aspect of the present invention. The movement detector according to the first aspect is configured to set its detection area independent of an installation position of the movement detector at the luminaire. The at least two antennas of the plurality of antennas of the radar sensor achieve a directivity of the movement detector to a desired direction for detecting movement of a physical object by being configured to emit electromagnetic waves with a phase shift between them. The directivity of the movement sensor is dependent on the phase shift.

The passage "plurality of antennas" is to be understood as "two or more antennas". The plurality of antennas of the radar sensor may be configured to emit electromagnetic waves, in particular radio waves, allowing the movement detector to detect in the detection area of the movement detector a physical object, such as a person. The electromagnetic waves emittable by the at least two antennas of the plurality of antennas of the radar sensor comprise a phase shift between each other. The phase shift causes a positive interference and/or negative interference, depending on the phase shift, between the electromagnetic waves emittable by the at least two antennas and, thus, set a detection area of the movement detector. In other words, the detection area of the movement detector may be changed by changing the phase shift between the electromagnetic waves emittable by the at least two antennas.

For example, at least one antenna of the at least two antennas may be configured to emit electromagnetic waves with a first phase (may be referred to as first electromagnetic waves). The at least one remaining antenna of the at least two antennas may be configured to emit electromagnetic waves with a second phase (may be referred to as second electromagnetic waves), wherein the second phase is different to the first phase. The difference between the first phase and the second phase corresponds to the phase shift between the first electromagnetic waves and the second electromagnetic waves.

Depending on the phase shift between the electromagnetic waves emittable by the at least two antennas, the electromagnetic waves positively interfere (add together) to increase the radiation in a desired direction and negatively interfere (cancel) to suppress radiation in undesired directions. Therefore, depending on the phase shift the detection area of the movement detector may be set respectively adjusted. The detection area of the movement detector may correspond to the area that is covered by the electromagnetic waves emittable by the plurality of antennas of the radar sensor. Thus, electromagnetic waves that negatively interfere with each other (cancel each other) do not cover an area and, thus, to not contribute to the detection area of the movement detector.

Optionally, each antenna of the plurality antennas is configured to set the detection area of the movement detector by emitting electromagnetic waves with a phase shift between each other. As outlined already above, the plurality of antennas of the radar sensor may be arranged in the form of an array respectively may form an antenna array.

The phase shift between the electromagnetic waves emittable by the at least two antennas of the plurality of antennas is to be understood as a phase shift greater than zero degree (0°). A phase shift of zero degrees corresponds to no phase shift. In this case a phase shift is not present. The term "phase difference" may be used as a synonyms for the term "phase shift".

The radar sensor of the movement detector is not limited to a specific radar sensor and, thus, may correspond to any known radar sensor comprising an antenna array with a plurality of antennas that are configured as described herein.

The movement detector may comprise a processing unit configured to determine respectively recognize movement of one or more physical objects, such as one or more persons, based on output data of the radar sensor by processing the output data of the radar sensor. The movement detector may comprise besides the radar sensor any components needed for detecting, based on the output of the radar sensor, a movement of one or more physical objects, such as one or more persons. Such components are known and, thus, no further information is provided thereon.

The movement detector may be configured to be arranged on a plane of the luminaire such that a detection direction of the movement detector comprises a direction orthogonal to the plane, when the movement detector is arranged on the plane of the luminaire.

The at least two antennas of the plurality of antennas may be configured to direct the detection direction of the movement detector to a direction different to the direction orthogonal to the plane, when the movement detector is arranged on the plane of the luminaire. For example, the luminaire may be horizontally mounted on a ceiling of a room and the plane may be a horizontal plane of the luminaire on which the movement detector may be configured to be horizontally arranged, such that a detection direction of the movement detector is orthogonal to the plane, when the movement detector is horizontally arranged on the plane and the plurality of antennas emit electromagnetic waves without a phase shift. The at least two antennas of the plurality of antennas of the radar sensor may be configured to adjust the detection direction to a desired direction that is different to the direction orthogonal to the plane by emitting electromagnetic waves with a phase shift between each other. The adjustment of the detection direction depends on the phase shift, in particular on an adjustment of the phase shift.

The aforementioned description with respect to the at least two antennas of the plurality of antennas of the radar sensor may be valid for each of the plurality of antennas of the radar sensor.

The at least two antennas of the plurality of antennas may be configured to direct the detection area of the movement detector to a desired direction by emitting the electromagnetic waves with the phase shift between each other.

Thus, the at least two antennas of the plurality of antennas may be configured to direct the detection area of the movement detector to a desired detection area by emitting the electromagnetic waves with the phase shift between each other.

The aforementioned description with respect to the at least two antennas of the plurality of antennas of the radar sensor may be valid for each of the plurality of antennas of the radar sensor.

Each antenna of the at least two antennas may be configured to emit electromagnetic waves with a different phase compared to the at least one other antenna of the at least two antennas.

Optionally, each antenna of the plurality of antennas of the radar sensor may be configured to emit electromagnetic waves with a different phase compared to the other antenna(s) of the plurality of antennas.

By setting the phase of electromagnetic waves emittable by each antenna of the at least two antennas or the plurality of antennas, the phase shift between the electromagnetic waves emittable by the at least two antennas respectively the plurality of antennas may be set.

Each antenna of the at least two antennas or the plurality of antennas may be configured to emit electromagnetic waves with a same frequency.

Optionally, the phase shift is set by a layout of the plurality of antennas. Additionally or alternatively, the movement detector may comprise a phase shifter circuit configured to dynamically set the phase shift by electrically operating the at least two antennas.

Thus, the phase shifter circuit may be configured to adjust respectively change the detection area of the movement detector by adjusting respectively changing the phase shift between the electromagnetic waves emittable by the at least two antennas.

The phase shifter circuit is not limited to a specific phase shifter circuit and, thus, may be implemented by any means known in the art.

The plurality of antennas each may comprise a centric detection area that is symmetrical with regard to a center of the detection area.

The centric detection area of each antenna may comprise a round shape respectively may be round.

Thus, the antenna array of the radar sensor may comprise a centric detection area that is symmetrical with regard to a center of the detection area, when the plurality of antennas of the antenna array emit electromagnetic waves without a phase shift. Therefore, the detection area of the movement detector may be symmetrical with regard to a center of the detection area, when the plurality of antennas of the antenna array of the radar sensor emit electromagnetic waves without a phase shift. The centric detection area of the movement detector may comprise a round shape respectively may be round.

The at least two antennas of the plurality of antennas of the radar sensor may be configured to set the detection area of the movement detection from a symmetrical area to an asymmetrical area directed towards a desired detection direction of the movement detector by emitting electromagnetic waves with a phase shift between each other.

Optionally, the plurality of antennas of the radar sensor may be configured to set the detection area of the movement detection from a symmetrical area to an asymmetrical area directed towards a desired detection direction of the movement detector by emitting electromagnetic waves with a phase shift between each other.

Optionally, the plurality of antennas are patch antennas.

Patch antennas are well suited for setting the detection area of the movement detector to a desired direction by setting the phase shift between the at least two antennas of the plurality of antennas of the radar sensor of the movement detector.

The plurality of antennas is not limited to patch antennas and may, in addition or alternatively, be implemented by any other one or more antenna types known in the art.

The movement detector may be configured to be arranged on a circuit board of the luminaire, on which a light source of the luminaire is arranged, such that the detection direction of the movement detector comprises an illumination direction of the light source when the movement detector is arranged on the circuit board of the luminaire.

The at least two antennas of the plurality of antennas may be configured to direct the detection direction of the movement detector to a direction different to the illumination direction, when the movement detector is arranged on the circuit board of the luminaire. For example, the luminaire may be horizontally mounted on a ceiling of a room and the movement detector may be configured to be arranged on the circuit board of the luminaire, such that the detection direction of the movement detector corresponds to the illumination direction of the light source, when the movement detector is arranged on the circuit board and the plurality of antennas emit electromagnetic waves without a phase shift. The at least two antennas of the plurality of antennas of the radar sensor may be configured to adjust the detection direction to a desired direction that is different to the illumination direction of the light source by emitting electromagnetic waves with a phase shift between each other. The adjustment of the detection direction depends on the phase shift, in particular on an adjustment of the phase shift.

The aforementioned description with respect to the at least two antennas of the plurality of antennas of the radar sensor may be valid for each of the plurality of antennas of the radar sensor.

The light source may comprise or correspond to one or more lighting means. The one or more lighting means may correspond to one or more light emitting diodes (LEDs) and/or any other one or more electric lighting means known in the art.

The at least two antennas of the plurality of antennas may be configured to direct the detection area of the movement detector to an area, illuminable by the light source of the luminaire, by emitting the electromagnetic waves with the phase shift between each other, when the movement detector is arranged on the circuit board of the luminaire.

The aforementioned description with respect to the at least two antennas of the plurality of antennas of the radar sensor may be valid for each of the plurality of antennas of the radar sensor.

In order to achieve the movement detector according to the first aspect of the present invention, some or all of the above described optional features may be combined with each other.

A second aspect of the present invention provides a luminaire. The luminaire comprises a movement detector according to the first aspect of the present invention, as described above. The movement detector is arranged on a plane of the luminaire such that a detection direction of the movement detector comprises a direction orthogonal to the plane.

The above description of the movement detector according to the first aspect of the present invention is correspondingly valid for the luminaire according to the second aspect of the present invention, in particular for the movement detector of the luminaire of the second aspect.

The plane may correspond to the surface of a circuit board of the luminaire, on which a light source of the luminaire is arranged. The movement detector may be arranged on the circuit board such that the detection direction of the movement detector comprises an illumination direction of the light source.

The light source may comprise or correspond to one or more lighting means. The one or more lighting means may correspond to one or more light emitting diodes (LEDs) and/or any other one or more electric lighting means known in the art.

Optionally, the luminaire comprises a phase shifter circuit configured to dynamically set the phase shift between the electromagnetic waves, emittable by the at least two antennas of the plurality of antennas of the movement detector, by electrically operating the at least two antennas.

The phase shifter circuit is not limited to a specific phase shifter circuit and, thus, may be implemented by any means known in the art.

The above description with respect to the phase shifter circuit of the movement detector according to the first aspect of the present invention is correspondingly valid for the phase shifter circuit of the luminaire according to the second aspect of the present invention.

The luminaire may be a street luminaire, and the at least two antennas of the plurality of antennas of the movement detector may be configured to direct the detection area of the movement detector to a street area by emitting the electromagnetic waves with the phase shift between each other.

The luminaire may be a free-standing luminaire, and the at least two antennas of the plurality of antennas of the movement detector may be configured to direct the detection area of the movement detector to an area in the vicinity of the luminaire by emitting the electromagnetic waves with the phase shift between each other.

The luminaire may be an outdoor luminaire, such as a street luminaire, outdoor parking lot luminaire etc., or an indoor luminaire, such as a ceiling luminaire, a wand luminaire, a free-standing luminaire etc. The luminaire is not limited to a specific luminaire type and, thus, may be any luminaire type known in the art.

The luminaire may comprise beside the light source one or more electrical components for controlling and electrically supplying the light source, in particular dependent on the detection results of the movement detector. Such electrical components of the luminaire are well known in the art and, thus, no detailed information is provided with regard thereto.

The luminaire may comprise a control unit configured to control, based on a detection result of the movement detector, the light emission of the luminaire, in particular the light emission by the light source of the luminaire. In particular, the control unit may be configured to control the electrical supply to the light source of the luminaire in order to control the light emission by the light source. The more electrical energy is supplied to the light source the greater is the amount of light respectively the light intensity of the light emitted by the light source. For electrically supplying the light source the luminaire may comprise one or more operating devices that are configured to electrically operate the light source, in particular electrically supply the light source, wherein the control unit is configured to control the operating devices, in particular the electrical energy provided by the one or more operating devices to the light source.

The control unit may be a processor, a microprocessor, a controller, a microcontroller, an application specific integrated circuit (ASIC), a field programmable gate array (FPGA) or any combination thereof.

The control unit of the luminaire may be configured to control light emission of the luminaire, in particular light emission of the light source of the luminaire, such that the luminaire
- emits light in case in the detection area of the movement detector movement of a physical object, such as a person, is detected by the movement detector, and
- does not emit light or emits light at a reduced dimming level in case in the detection area of the movement detector no movement of a physical object, such as a person, is detected by the movement detector.

The luminaire may comprise one or more further detectors respectively sensor units, such as one or more of temperature detectors, light detectors, ambient light detectors, additional movement detectors etc. The outputs of the one or more optional further detectors may be used by the control unit for controlling the light emission by the luminaire.

The luminaire according to the second aspect of the present invention achieves the same advantages as the movement detector according to the first aspect of the present invention, described above.

In order to achieve the luminaire according to the second aspect of the present invention, some or all of the above described optional features may be combined with each other.

A third aspect of the present invention provides a method for setting a detection area of a movement detector for a luminaire. Optionally, the movement detector is a movement detector according to the first aspect of the present invention, as described above. The movement detector comprises a radar sensor, wherein the radar sensor comprises an antenna array with a plurality of antennas. The movement detector is configured to detect, in the detection area, movement of a physical object using the radar sensor. The physical object is optionally a person. The method comprises: setting the detection area of the movement detector by setting a phase shift between electromagnetic waves emittable by at least two antennas of the plurality of antennas.

The above description of the movement detector according to the first aspect of the present invention is correspondingly valid for the method according to the third aspect of the present invention.

The method according to the third aspect of the present invention achieves the same advantages as the movement detector according to the first aspect of the present invention, described above. In order to achieve the method according to the third aspect of the present invention, some or all of the above described optional features may be combined with each other.

In the following, the invention is described exemplarily with reference to the enclosed Figures, in which
- **Figure 1**: exemplarily shows a schematic block diagram of a movement detector according to an embodiment of the present invention.
- **Figure 2**: exemplarily shows a schematic side view of a luminaire according to an embodiment of the present invention.
- **Figure 3**: exemplarily shows a schematic side view of a luminaire according to an embodiment of the present invention.
- **Figure 4**: exemplarily shows a schematic top view of a luminaire according to an embodiment of the present invention.

In the Figures, corresponding elements have the same reference signs. The proportions and dimensions of the elements shown in the Figures do not represent the elements of the luminaire respectively movement detector to scale, but are merely chosen to describe the structure and function of the luminaire respectively movement detector.

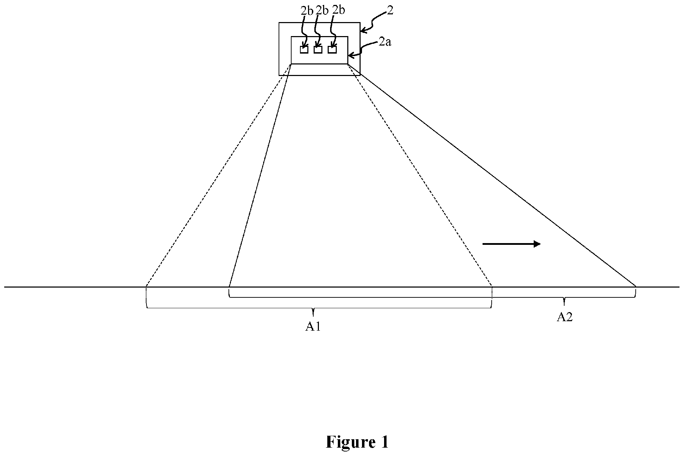

**Figure 1** exemplarily shows a schematic block diagram of a movement detector according to an embodiment of the present invention.

The above description of the movement detector according to the first aspect of the present invention is valid for the movement detector 2 of Figure 1.

The movement detector 2 is a movement detector for a luminaire. As shown in Figure 1, the movement detector 2 comprises a radar sensor 2a. The radar sensor 2a comprises an antenna array with a plurality of antennas 2b. The plurality of antennas 2b are exemplarily shown by three antennas. This number is only by way of example and does not limit the present invention. The antenna array of the radar sensor 2a may comprise two or more antennas 2b.

The movement detector 2 is configured to detect, in a detection area, movement of a physical object, such as a person, using the radar sensor 2a and, thus, using the plurality of antennas 2b of the antenna array of the radar sensor 2a. In Figure 1 two different detections areas A1 and A2 of the movement detector 2 are shown.

The detection area A1 of the movement detector 2, shown in Figure 1, corresponds to a detection area of the movement detector 2, in case the plurality of antennas 2b of the radio sensor 2a emit electromagnetic waves, in particular radio waves, without a phase shift between each other. In this case the detection area A1 may be a centric detection area that is symmetrical with regard to a center of the detection area A1. The centric detection area A1 may comprise a round shape.

With other words, the detection area A1 correspond to a detection area of a movement detector comprising a radar sensor that emits electromagnetic waves without a phase shift. In this case, the detection area A1 of the movement detector depends on an optional optic of the movement detector and an installation position of the movement detector at a luminaire.

At least two antennas of the plurality of antennas 2b of the movement detector 2 are configured to set the detection area of the movement detector 2 by emitting electromagnetic waves with a phase shift between each other. The detection area A2 of the movement detector 2, shown in Figure 1, corresponds to a detection area of the movement detector 2, in case the at least two antennas of the plurality of antennas 2b emit electromagnetic waves with a phase shift between each other. Thus, the plurality of antennas 2b of the movement detector 2 are configured to set the detection area of the movement detector 2 to correspond to the detection area A2 shown in Figure 1 in that at least two antennas of the plurality of antennas 2b of the movement detector are configured to emit electromagnetic waves with a phase shift between each other

Thus, as shown in Figure 1, the movement detector 2 is configured to set its detection area using the radar sensor 2a. In particular, the at least two antennas of the plurality of antennas 2b are configured to set the detection area of the movement detector 2, in particular the size and symmetry of the detection area, by emitting electromagnetic waves with a phase shift between each other. The detection area of the movement detector 2, in particular the size and symmetry of the detection area, depends on the phase shift. Thus, the detection area, in particular its size and symmetry, may be adjusted by generating a phase shift or adjusting a phase shift between electromagnetic waves emittable by at least two antennas of the plurality of antennas 2b of the movement detector 2.

As shown in Figure 1, due to the phase shift between the electromagnetic waves emittable by the at least two antennas of the plurality of antennas 2b of the radar sensor 2a, the resulting detection area A2 of the movement detector A2 is asymmetrical compared to the centric detection area A1 that is symmetrical with regard to a center of the detection area A1.

Thus, the at least two antennas of the plurality of antennas 2b are configured to direct the detection area A1 of the movement detector 2 to a desired direction (indicated in Figure 1 by an arrow) by emitting the electromagnetic waves with the phased shift between each other. This results in the detection area A2 of the movement detector 2 that is directed to the desired direction. Therefore, the at least two antennas of the plurality of antennas 2b are configured to direct the detection area of the movement detector 2 to a desired area by emitting the electromagnetic waves with the phased shift between each other.

The phase shift between the electromagnetic waves emittable by the at least two antennas of the plurality of antennas 2b may be set by a layout of the plurality of antennas 2b, i.e. by a layout of the antenna array of the radar sensor 2a comprising the plurality of antennas 2b. In this case, the detection area of the movement detector 2 may correspond to the detection area A2 depending on the phase shift between the electromagnetic waves emittable by the at least two antennas of the plurality of antennas 2b. The phase shift is set by the layout of the antenna array comprising the plurality of antennas 2b of the radar sensor 2a. Alternatively or additionally, the movement detector 2 may comprise a phase shifter circuit (not shown in Figure 1) that is configured to dynamically set the phase shift by electrically operating the at least two antennas of the plurality of antennas 2b of the radar sensor. Thus, the phase shifter circuit may be configured to adjust respectively change the detection area of the movement detector by adjusting respectively changing the phase shift between the electromagnetic waves emittable by the at least two antennas. In this case, the detection area of the movement detector 2 may correspond to the detection areas A1 and A2 depending on the phase shift between the electromagnetic waves emittable by the at least two antennas of the plurality of antennas 2b. For achieving the detection area A1, the phase shifter circuit may be configured to electrically operate the plurality of antennas 2b of the radar sensor 2a such that there is no phase shift between the electromagnetic waves emittable by the plurality of antennas 2b. For achieving the detection area A2, the phase shifter circuit may be configured to electrically operate the at least two antennas of the plurality of antennas 2b of the radar sensor 2a such that there is a phase shift between the electromagnetic waves emittable by the at least two antennas of the plurality of antennas 2b..

The description with respect to the at least two antennas of the plurality of antennas 2b of the radar sensor is optionally valid for each antenna of the plurality of antennas 2b

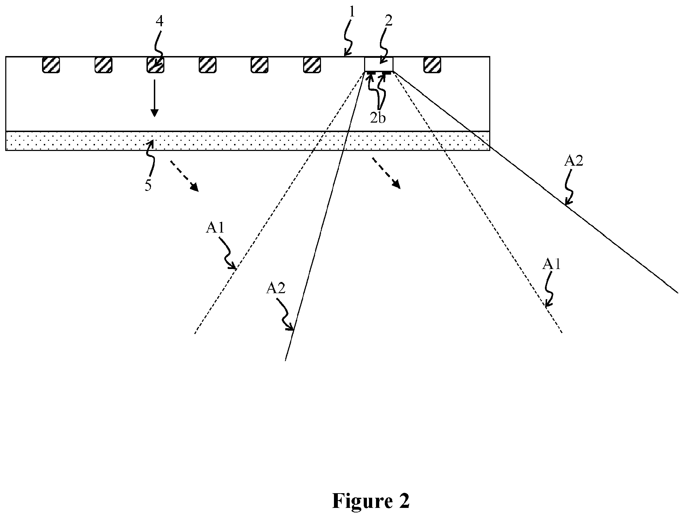

In Figure 2 an arrangement of the movement detector 2 at a luminaire 1 is exemplarily shown.

**Figure 2** exemplarily shows a schematic side view of a luminaire according to an embodiment of the present invention.

The above description with regard to the luminaire according to the second aspect of the present invention is correspondingly valid for the luminaire 1 of Figure 2.

The luminaire 1 comprises a movement detector 2. The movement detector 2 corresponds to the movement detector of Figure 1 and, thus, the above description of Figure 1 is valid for the movement detector 2 of the luminaire 1 of Figure 2. According to Figure 2, the plurality of antennas 2b of the radar sensor of the movement detector 2 exemplarily correspond to two antennas 2b. This is only by way of example and the plurality of antennas 2b of the radar sensor may correspond to more than two antennas, as outlined already above.

The luminaire 1 further comprises one or more lighting means 4, which may be one or more light emitting diodes. The one or more lighting means 4 correspond to respectively form a light source of the luminaire 1. According to Figure 2, the luminaire comprises seven lighting means 4. This number is only by way of example and does not limit the present disclosure. As indicated in Figure 2, the movement detector 2 is arranged on a circuit board (not shown) of the luminaire 1, on which the light source (in particular the lighting means 4) of the luminaire 1 is arranged, such that the detection direction of the movement detector 2 comprises an illumination direction of the light source, when the movement detector 2 is arranged on the circuit board of the luminaire 1. The illumination direction of the light source, in particular of the lighting means 4, is exemplarily indicated in Figure 2 by an arrow. The illumination direction of the light source may be understood as the main illumination direction of the light source.

The at least two antennas of the plurality of antennas 2b of the movement detector 2 are configured to direct the detection area of the movement detector 2 to an area, illuminable by the light source of the luminaire 1, by emitting electromagnetic waves with a phase shift between each other, when the movement detector 2 is arranged on the circuit board of the luminaire 1. The detection area A1 indicated by stripped border lines A1 corresponds to a detection area of the movement detector 2, in case the plurality of antennas 2b of the movement detector 2 emit electromagnetic waves without a phase shift. The further detection area A2, shifted to the right of Figure 2 compared to the detection area A1, corresponds to a detection area of the movement detector that may be set by the at least two antennas of the plurality of antennas 2b of the radar sensor of the movement detector 2 by emitting electromagnetic waves with a phase shift between them. The further detection area A2 is indicated by solid border lines A2.

As outlined already above, the phase shift between the electromagnetic waves emittable by the at least two antennas of the plurality of antennas 2b may be set by a layout of the plurality of antennas 2b, i.e. by a layout of the antenna array of the radar sensor 2b comprising the plurality of antennas 2b. Alternatively or additionally, the luminaire 1 may comprise a phase shifter circuit (not shown in Figure 2) that is configured to dynamically set the phase shift by electrically operating the at least two antennas of the plurality of antennas 2b of the radar sensor. Thus, the phase shifter circuit may be configured to adjust respectively change the detection area of the movement detector 2 by adjusting respectively changing the phase shift between the electromagnetic waves emittable by the at least two antennas.

As shown in Figure 2, the luminaire 1 may comprise an optic arrangement 5 comprising one or more optic elements, such as at least one of lenses, diffusors, optical filters etc. The optic arrangement 5 may be configured to direct the light emitted by the light source, in particular the lighting means 4, to a desired direction. The illumination direction of the light source of the luminaire 1 may be understood as the direction to which the light emitted by the light source is directed to by the optic arrangement 5. Thus, the illumination direction of the light source may exemplarily correspond to the direction indicated in Figure 2 by the stripped arrows.

The movement detector 2 may be configured to be arranged on a plane of the luminaire 1. The plane of the luminaire 1 may correspond to the circuit board of the luminaire 1, on which the light source of the luminaire 1 is arranged on, as outlined above, or may be any other plane, such as a further circuit board or a support of the luminaire 1. The movement detector 2 may be arranged on the plane such that the detection direction of the movement detector comprises a direction orthogonal to the plane, when the movement detector 2 is arranged on the plane of the luminaire 1.

In particular, the at least two antennas of the plurality of antennas 2b of the radar sensor of the movement detector 2 may be configured to set the detection area A2 of the movement detector 2 by emitting electromagnetic waves with a phase shift between each other, when the movement sensor 2 is arranged on the plane. Optionally, the plane may be a horizontal plane of the luminaire 1 and the movement detector 2 may be configured to be horizontally arranged on the horizontal plane. The at least two antennas of the plurality of antennas 2b of the radar sensor of the movement detector 2 may be configured to set the detection area A2 of the movement detector 2 by emitting electromagnetic waves with a phase shift between each other, when the movement sensor 2 is horizontally arranged on the horizontal plane.

The description with respect to the at least two antennas of the plurality of antennas 2b of the radar sensor of the movement detector 2 is optionally valid for each antenna of the plurality of antennas 2b.

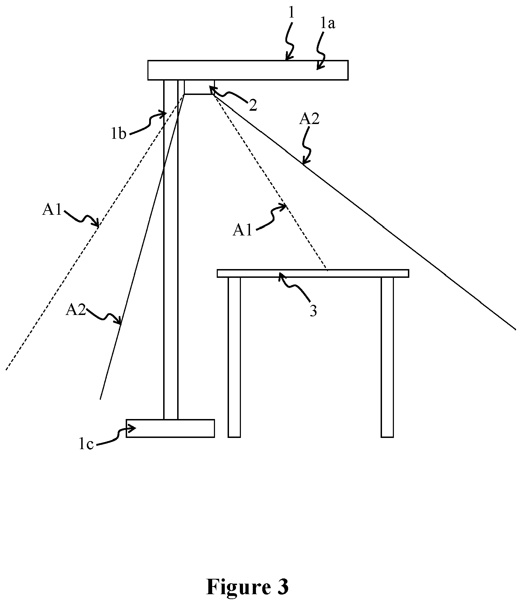

**Figure 3** exemplarily shows a schematic side view of a luminaire according to an embodiment of the present invention.

The luminaire 1 according to Figure 3 is a free-standing luminaire. This is only by way of example and does not limit the present invention. Thus, the following description is correspondingly valid for any other type of luminaire. The above description of Figure 2 is correspondingly valid for the luminaire 1 of Figure 3.

The luminaire 1 comprises a head part 1a, a pole part 1b for holding the head part 1a above ground and an optional foot part 1c for positioning the luminaire 1 on the ground. A light source (not shown in Figure 3) may be arranged at the head part 1a for providing light emission of the luminaire 1, such that light emitted by the light source is emitted in the direction of the ground (downwards). Optionally, the light source may be configured to emit light in at least one further direction, e.g. in the direction of the ceiling (upwards).

As shown in Figure 3, the luminaire 1 may be used to illuminate a table 3 that is arranged in the vicinity of the luminaire 1.

The luminaire 1 comprises a movement detector 2. The movement detector 2 may correspond to the movement detector of Figures 1 and 2 and, thus, the above description of Figures 1 and 2 as well as the above description of the movement detector according to the first aspect of the present invention is correspondingly valid for the movement detector 2 of the luminaire 1 of Figure 3.

The luminaire 1 shown in Figure 2 may correspond to at least a part of the head part 1a of the luminaire 1 of Figure 3. According to Figure 3, the movement detector is shown to be arranged on the luminaire 1 (on a housing of the luminaire 1), in particular on the head part 1a of the luminaire 1. Alternatively, the movement detector 2 may be arranged in the luminaire 1 (in the housing of the luminaire 1). In this case, the movement detector may be configured to detect, in the detection area of the movement detector 2, movement of a physical object (e.g. a person) via the light emission area of the luminaire 1, in particular via an optional optic arrangement (shown in Figure 2) of the luminaire 1. The light emission area of the luminaire 1 is to be understood as an area via which the light source of the luminaire 1 emits light to the outside of the luminaire (outside of the housing). In this case the light source is arranged in the luminaire (in the housing of the luminaire). The movement detector 2 may be configured to detect movement of a physical object via any part respectively area of the luminaire 1 that allows electromagnetic waves, in particular radio waves, to travel trough (that is penetrable by electromagnetic waves), in case the movement detector is arranged in the luminaire 1.

In Figure 3, again the detection area A1 of a movement detector comprising a radar sensor that emits electromagnetic waves without a phase shift is shown (stripped border lines A1). In this case, the detection area of the movement detector depends on an optional optic of the movement detector and an installation position of the movement detector at the luminaire 1.

As shown by the detection area A2 (solid borderlines A2), the movement detector 2 of the luminaire 1 is configured to set its detection area to a desired direction by using the radar sensor, in particular the at least two antennas of the radar sensor that are configured to emit electromagnetic waves with a phase shift between each other. Namely, the at least two antennas of the radar sensor of the movement detector 2 are configured to direct the detection area of the movement detector 2 to the desired direction respectively to a desired area by emitting the electromagnetic waves with the phase shift between them. In case of Figure 3, the desired direction corresponds to a direction towards the table 3 and the desired area comprises the table 3. Thus, the detection area A2 of the movement detector 2 may be set by the phase shift such that the table 3 and a position directly in front of the table 3, where a person may sit at the table 3, are comprised by the detection area A2. As a result, the movement detector 2 may be configured to detect movement of a person at the table 3 and, thus, detect whether a person is present at the table 3 or not. Since the detection area A2 is set by the phase shift between the electromagnetic waves emittable by the radar sensor of them movement detector 2, the movement detector 2 may be arranged in a way at the luminaire 1 that is adapted to the layout of the luminaire 1. Namely, the installation position does not need to be used for setting the detection area of the movement detector 2.

The detection result of the movement detector 2 based on detections in the detection area A2 comprising the table 3 and, thus, a working space may be used for controlling a lighting of the working space 3. In addition or alternatively, the detection result may be used for communicating an occupancy information of the working space 3 by the luminaire 1 to a data base and/or a facility management centre.

The description with respect to the at least two antennas of the plurality of antennas of the radar sensor of the movement detector 2 is optionally valid for each antenna of the plurality of antennas.

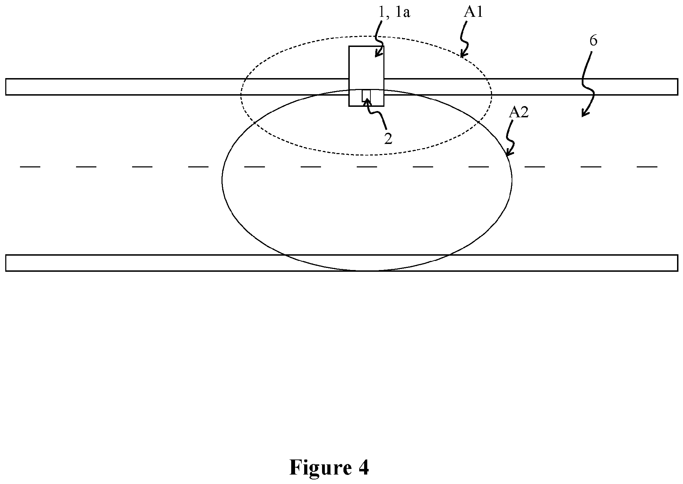

**Figure 4** exemplarily shows a schematic top view of a luminaire according to an embodiment of the present invention.

The above description with respect to Figures 1 to 3 is correspondingly valid for the luminaire 1 and the movement detector 2 of Figure 4.

The luminaire 1 of Figure 4 exemplarily corresponds to a street luminaire. This is only by way of example and does not limit the present invention. Thus, the following description is correspondingly valid for any other type of luminaire.

In Figure 4, a top view of a head part 1a of the street luminaire 1 is shown, wherein the luminaire 1 comprises a movement detector 2. The movement detector 2 may correspond to a movement detector of Figures 1 to 3 and, thus, the above description of Figures 1 to 3 as well as the above description of the movement detector according to the first aspect of the present invention is correspondingly valid for the movement detector 2 of the luminaire 1 of Figure 4.

Figure 4 also shows the detection area A1 of a movement detector comprising a radar sensor that emits electromagnetic waves without a phase shift (stripped border lines A1). In this case, the detection area of the movement detector depends on an optional optic of the movement detector and an installation position of the movement detector at the luminaire 1.

The at least two antennas of the plurality of antennas of the radars sensor of the movement detector 2 are configured to set the detection area A2 (solid border lines) of the movement detector 2 by emitting electromagnetic waves with a phase shift between each other. In particular, the at least two antennas may be configured to direct the detection area A2 of the movement detector 2 to a desired direction respectively desired area by emitting the electromagnetic waves with a phase shift between each other.

Thus, the detection area of the movement detector 2 may correspond to the area A2, shown in Figure 4, that comprises a street area of a street 6 in the vicinity of the luminaire 1. In contrast to the detection area A1, the detection area A2 of the movement detector 2 is directed to the street area in the vicinity of the luminaire 1. Thus, the desired direction is a direction towards the street 6 and the desired area corresponds to the street area in the vicinity of the luminaire 1.

The description with respect to the at least two antennas of the plurality of antennas of the radar sensor of the movement detector 2 is optionally valid for each antenna of the plurality of antennas.

## Claims

1. A movement detector (2) for a luminaire (1), wherein
- the movement detector (2) comprises a radar sensor (2a), the radar sensor (2a) comprising an antenna array with a plurality of antennas (2b);
- the movement detector (2) is configured to detect, in a detection area (A1, A2), movement of a physical object, optionally a person, using the radar sensor (2a); and
- at least two antennas of the plurality of antennas (2b) are configured to set the detection area (A1, A2) of the movement detector (2) by emitting electromagnetic waves with a phase shift between each other.

2. The movement detector (2) according to claim 1, wherein
- the movement detector (2) is configured to be arranged on a plane of the luminaire (1) such that a detection direction of the movement detector (2) comprises a direction orthogonal to the plane, when the movement detector (2) is arranged on the plane of the luminaire (1).

3. The movement detector (2) according to claim 1 or 2, wherein
- the at least two antennas of the plurality of antennas (2b) are configured to direct the detection area (A1, A2) of the movement detector (2) to a desired direction by emitting the electromagnetic waves with the phase shift between each other.

4. The movement detector (2) according to any one of the previous claims, wherein
- the phase shift is set by a layout of the plurality of antennas (2b), and/or
- the movement detector (2) comprises a phase shifter circuit configured to dynamically set the phase shift by electrically operating the at least two antennas.

5. The movement detector (2) according to any one of the previous claims, wherein
- the plurality of antennas (2b) each comprise a centric detection area that is symmetrical with regard to a center of the detection area.

6. The movement detector (2) according to any one of the previous claims, wherein
- the plurality of antennas (2b) are patch antennas.

7. The movement detector (2) according to any one of the previous claims, wherein
- the movement detector (2) is configured to be arranged on a circuit board of the luminaire (1), on which a light source (4) of the luminaire is arranged, such that the detection direction of the movement detector (2) comprises an illumination direction of the light source (4) when the movement detector (2) is arranged on the circuit board of the luminaire (1).

8. The movement detector (2) according to any one of the previous claims, wherein
- the at least two antennas of the plurality of antennas (2b) are configured to direct the detection area (A1, A2) of the movement detector (2) to an area, illuminable by the light source (4) of the luminaire (1), by emitting the electromagnetic waves with the phase shift between each other, when the movement detector (2) is arranged on the circuit board of the luminaire (1).

9. A luminaire (1) comprising
- a movement detector (2) according to any one of the previous claims; wherein
- the movement detector (2) is arranged on a plane of the luminaire (1) such that a detection direction of the movement detector (2) comprises a direction orthogonal to the plane.

10. The luminaire (1) according to claim 9 wherein
- the plane corresponds to the surface of a circuit board of the luminaire (1), on which a light source (4) of the luminaire (1) is arranged; and
- the movement detector (2) is arranged on the circuit board such that the detection direction of the movement detector (2) comprises an illumination direction of the light source (4).

11. The luminaire (1) according to claim 9 or 10, wherein
- the luminaire (1) comprises a phase shifter circuit configured to dynamically set the phase shift between the electromagnetic waves, emittable by the at least two antennas of the plurality of antennas (2b) of the movement detector (2), by electrically operating the at least two antennas.

12. The luminaire (1) according to any one of claims 9 to 11, wherein
- the luminaire (1) is a street luminaire, and the at least two antennas of the plurality of antennas (2b) of the movement detector (2) are configured to direct the detection area (A1, A2) of the movement detector (2) to a street area by emitting the electromagnetic waves with the phase shift between each other.

13. The luminaire (1) according to any one of claims 9 to 11, wherein
- the luminaire (1) is a free-standing luminaire, and the at least two antennas of the plurality of antennas (2b) of the movement detector (2) are configured to direct the detection area (A1, A2) of the movement detector (2) to an area in the vicinity of the luminaire (1) by emitting the electromagnetic waves with the phase shift between each other.

14. Method for setting a detection area (A1, A2) of a movement detector (2), optionally according to any one of claims 1 to 9, for a luminaire (1), wherein
- the movement detector (2) comprises a radar sensor (2a), the radar sensor (2a) comprising an antenna array with a plurality of antennas (2b); and
- the movement detector (2) is configured to detect, in the detection area (A1, A2), movement of a physical object, optionally a person, using the radar sensor (2a); wherein
- the method comprises:
setting the detection area (A1, A2) of the movement detector (2) by setting a phase shift between electromagnetic waves emittable by at least two antennas of the plurality of antennas (2b).
